# EUROPEAN PATENT SPECIFICATION

(11) **EP 0 716 972 B1**
(45) Date of publication and mention of the grant of the patent: **09.02.2000**
(21) Application number: 95203193.8
(22) Date of filing: 21.11.1995
(51) Int. Cl.: B62B 3/10

(54) **Trolley for transporting containers**
Wagen zum Transportieren von Kästen
Chariot pour le transport de casiers

(30) Priority: 16.12.1994 NL 9402142
(43) Date of publication of application: 19.06.1996
(73) Proprietor: Koninklijke KPN N.V., 9726 AE Groningen (NL)
(72) Inventor: Van der Zon, Gerardus Petrus Antonius Paulus, NL-2264 XZ Leidschendam (NL)

(56) References cited:
- EP-A- 0 270 754
- WO-A-87/00015
- GB-A- 1 308 907

## Description

### A. Background to the invention

The invention is in the field of goods transportation in containers and, more particularly, in that of transporting postal items.

In a production-environment, for transporting containers, use is often made of:
. mobile, more or less cage-type holders on wheels also called roller containers, with one or more open sides through which the holder can be loaded and unloaded;
. mobile open, square or pallet-shaped frames on wheels, without upright partitioning, also called trolleys.

The roller containers and trolleys, loaded with stacks of containers, can in turn be transported in lorries or railway carriages.

When containers are stacked in a roller container, during transport of said roller container the open sides are completely or partly closed by means of a door or of various elastic straps in order to avoid the stacks of containers from falling over. When loading or unloading said roller containers, the following problems may occur. The closed sides of the holder obstruct ergonomically sound loading or unloading by hand. Grazing injuries to hands often occur through scraping along the closed sides, as do back complaints as a result of necessarily bending too low or stretching too high for handling the stacks of containers at the back. If loading and unloading has been mechanised or automised, the closed sides obstruct achieving high productivity.

The use of trolleys creates the following problem. In order to comply with the stability requirements during transport - the stacks of containers must be prevented from falling over - trolleys may only be stacked to the height of a few containers.

In order to be able to use open holders for transporting relatively high stacks of containers, means must be provided to safeguard the stability of the stacks of containers.

To that end, the invention is concerned with a transportation trolley for containers and containers to be transported on the transportation trolley, the transportation trolley comprising a substantially horizontally oriented first frame on wheels with a substantially vertically oriented second frame on to that, said second frame serving as a support element for first coupling means for detachably coupling on to second coupling means present on the containers to be transported, the first frame forming a support plane for at least one container, each container being supported by either the first frame or by a container standing beneath it.

Such a transportation trolley is disclosed in WO-A-87 00015. In the transportation trolley in accordance with the above-mentioned prior-art technique, there are first coupling means (7), called projections, on the trolley and the containers, with their second coupling means (8,9,10) pointing downwards, are hooked thereover. The disadvantage of using this system for the transportation of goods over longer distances, as with postal services, is that when driving the transportation trolleys on uneven surfaces, such as the floors of work areas or pavements, or when transporting them in lorries or railway carriages, the tranportation containers are frequently disconnected involuntarily and drop off the vehicle. In addition, this method of coupling the containers to the trolley prevents efficient unloading by mechanical means in one operation.

### B. Summary of the invention

The object of the transportation trolley in accordance with this invention is eliminating the above-mentioned drawback, i.e. providing a trolley which, in combination with containers appropriate thereto, provides for the stable stacking of containers on the trolley without the need for enclosing the stacked items. To this end, the transportation trolley and the containers to be transported on the transportation trolley are characterised by the first coupling means consisting of hook-shaped elements with their opening downwards, into the direction of the plane of the first frame, and the second coupling means comprising hook-shaped elements with their opening upwards, away from the bottom of a container.

As a result of the positioning of the coupling elements in relation to each other, the abrupt upwards movement - and subsequent falling over - of stacks of containers on the transportation trolley is prevented. Moreover, each stack is carried by the first frame, enabling containers to be loaded comparatively heavily without requiring the hook-shaped elements on the containers to be excessively strong.

The invention is based on the insight that the form and positioning of the non-movable hook-shaped elements on the transportation trolley and the hooking edges on the containers can be adapted to each other in such manner that:
irrespective of the stacking height, the containers are always securely restrained, without the need for movable elements to close the trolley or the containers;
. the transportation trolley is accessible from more than two sides and can therefore be loaded and unloaded by hand in an ergonomically sound manner;
. the transportation trolley can be unloaded with the aid of mechanical means or automation, thus achieving a high productivity.

In a preferred embodiment of the invention, the first frame is provided with at least two substantially perpendicular quiding edges protruding from the horizontal plane, whereas the bottoms of the containers to be transported are provided with corresponding upright edges for detachably coupling the containers to the first frame. Cooperation between the guiding edges and the upright edges ensures that, during transport with the trolley in accordance with this invention, the stacks of containers do not shift from the first frame.

In a further preferred embodiment, the first hook-shaped elements are situated on the second frame in as many columns as the number of stacks of containers to be transported, whereas the horizontal centre-to-centre distance between two vertical columns equals the length of a transportable container. Because of this positioning of the first hook-shaped elements, it is possible, in a upwards slanting, but substantially horizontal movement to take a stack of containers - or some of them - from the transportation trolley, independent from the other stacks.

### C. Reference

### WO-A-87 00015 Device at a display- or goods stand

### D. Brief description of the drawing

The invention will be explained in greater detail by means of a description of an illustrative embodiment, with reference to a drawing, in which
- Fig. 1: shows a spatial representation of an embodiment with steel tubes and a back wall;
- Fig. 2: shows a spatial representation of a partly loaded embodiment in accordance with Fig. 1;
- Fig. 3: shows a spatial representation of an embodiment in accordance with Fig. 1, in a state where part of a stack can be removed by hand;
- Fig. 4: shows a spatial representation of an embodiment in accordance with Fig. 1 in a mechanical unloading device;
- Fig. 5: shows a spatial representation of an embodiment with hooking edges instead of short hooks;
- Fig. 6: shows a spatial representation of an embodiment without a back wall;
- Fig. 7: shows a diagrammatic illustration of two possible combinations of trolleys and containers, differing according to the height of the containers.

### E. Description of an illustrative embodiment

The transportation trolley in accordance with the present invention is used for transporting substantially rectangular, stackable containers. When stacking said containers on to the trolley, with the upper edge or another edge or rim situated at a side of the container, they are hooked underneath on to one or more hook-shaped elements, or an edge or rim situated on the transportation trolley.

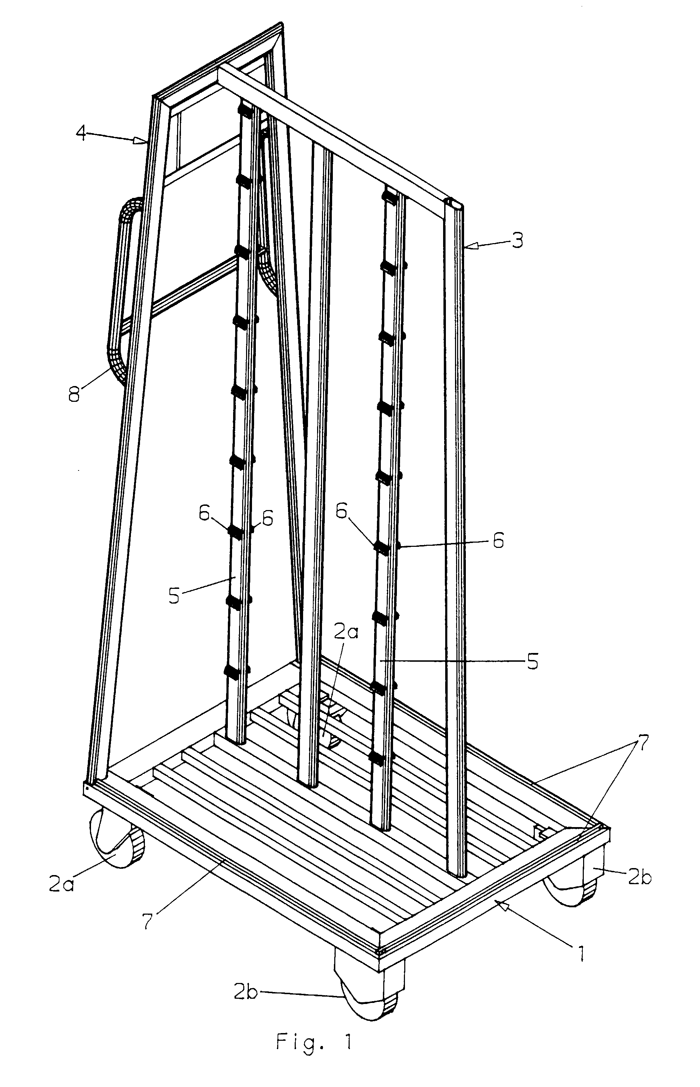

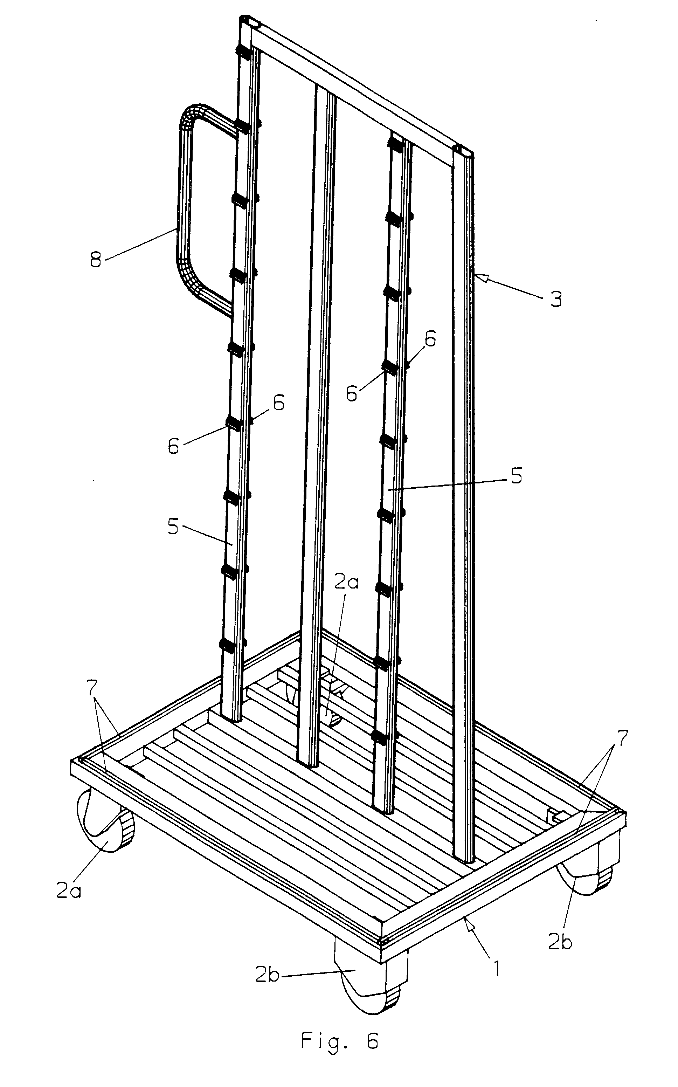

In Fig. 1, in this embodiment, (1) represents the first frame: the bottom of the transportation trolley. This may have either a substantially closed or substantially open structure. In this case, a bottom composed of tubes has been selected. Underneath the wheels (2b) and the swivel castors (2a) are situated. The second frame (3), in this embodiment also composed out of tubes, forms an upright partition. In principle, this may also have a substantially closed or substantially open structure. In the embodiment of Fig. 1, a back wall (4) is also present in the form of a frame. However, Fig. 6 shows that an embodiment without a back wall is also possible. The transportation trolley in Fig. 1 has been designed for the transportation of four stacks of containers. To this end, two uprights (5) have been incorporated in the frame (3), to which hook-shaped elements (6) with downward facing openings have been provided at either side. The centring and guiding edges (7) are situated on the bottom section (1). A handle (8) for pushing/pulling has been mounted on to the back wall (4).

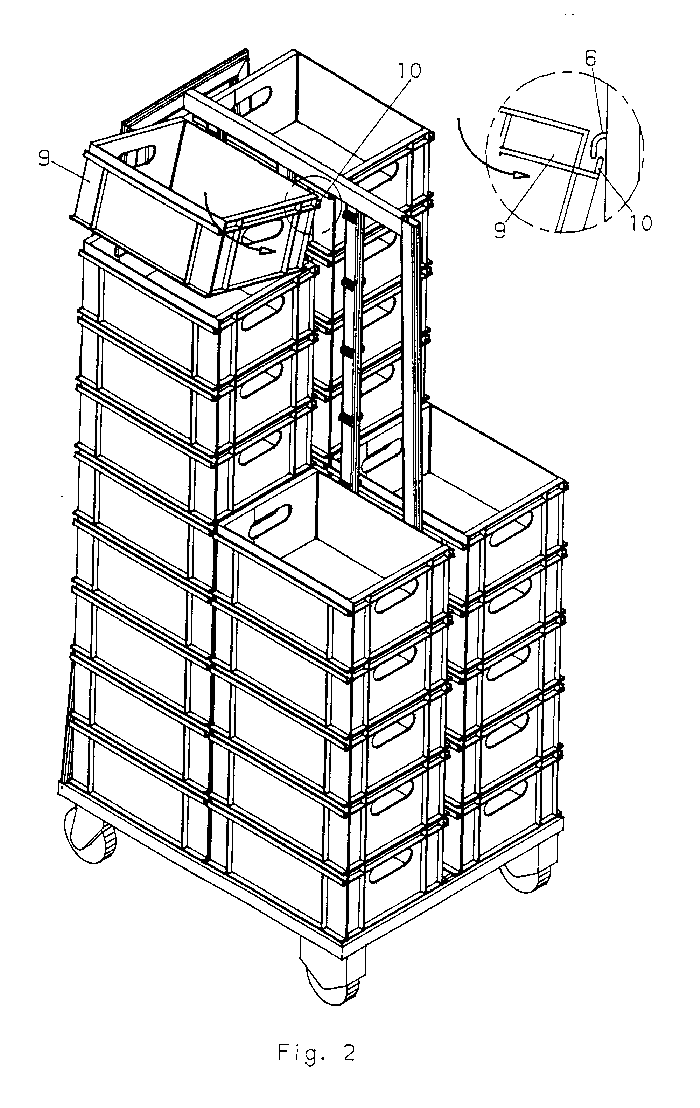

Fig. 2 shows the transportation trolley in the same embodiment as in Fig. 1, in a partly loaded state. While loading by hand, the containers (9) are stacked on top of each other, one by one, with a pushing and tilting movement. As a result of the tilting movement, the hooking edge (10) of the container (9) is arranged underneath a hooking element (6), and the container is locked. Unloading by hand is effected by moving in the opposite direction.

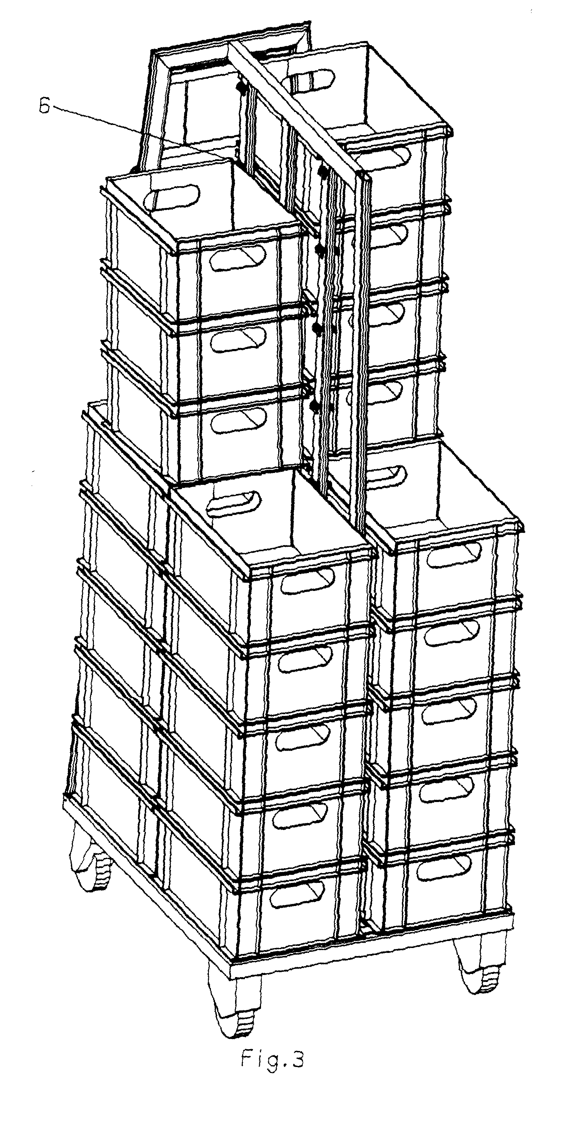

Fig. 3 shows, in case it is desirable to take off a part of a stack from the trolley, when unloading by hand, the part of the stack in question is lifted in an upward slant so much laterally from underneath the hooking elements (6) that the containers to be unloaded are released and can be lifted straight up.

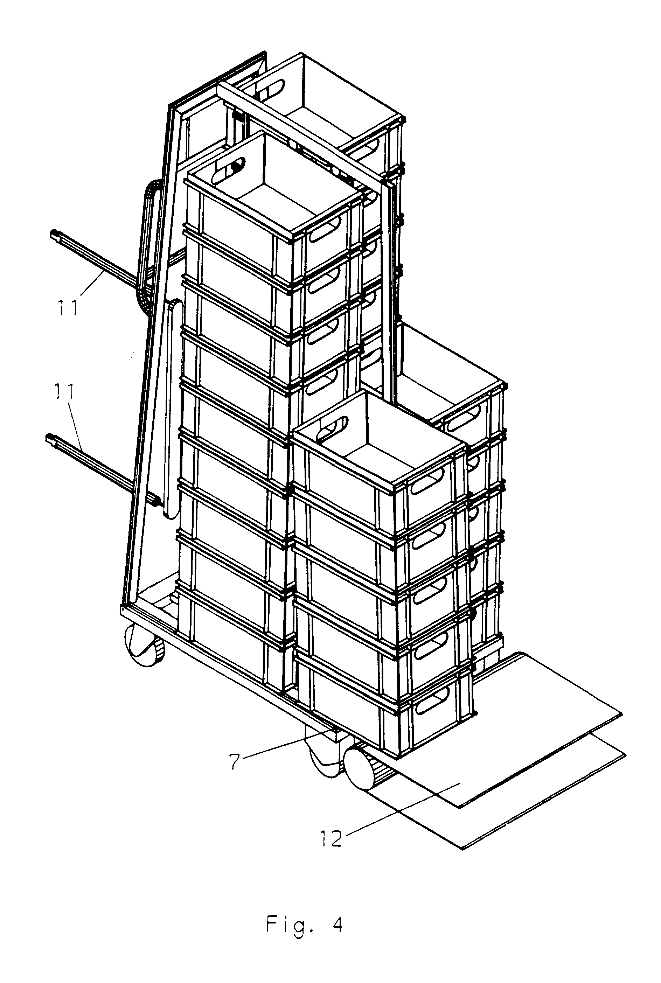

Fig. 4 shows the transportation trolley in an unloading device for mechanised unloading. To that end, the unloading device has been provided with pushing elements (11) which, in the demonstrated embodiment, can push four stacks of containers from the trolley on to - for instance - a conveyor belt (12) in one movement. In order to allow this, the unloading device is also provided with a device (not shown) for guiding the stacks of containers via the open bottom construction over the centring and guiding edges (7).

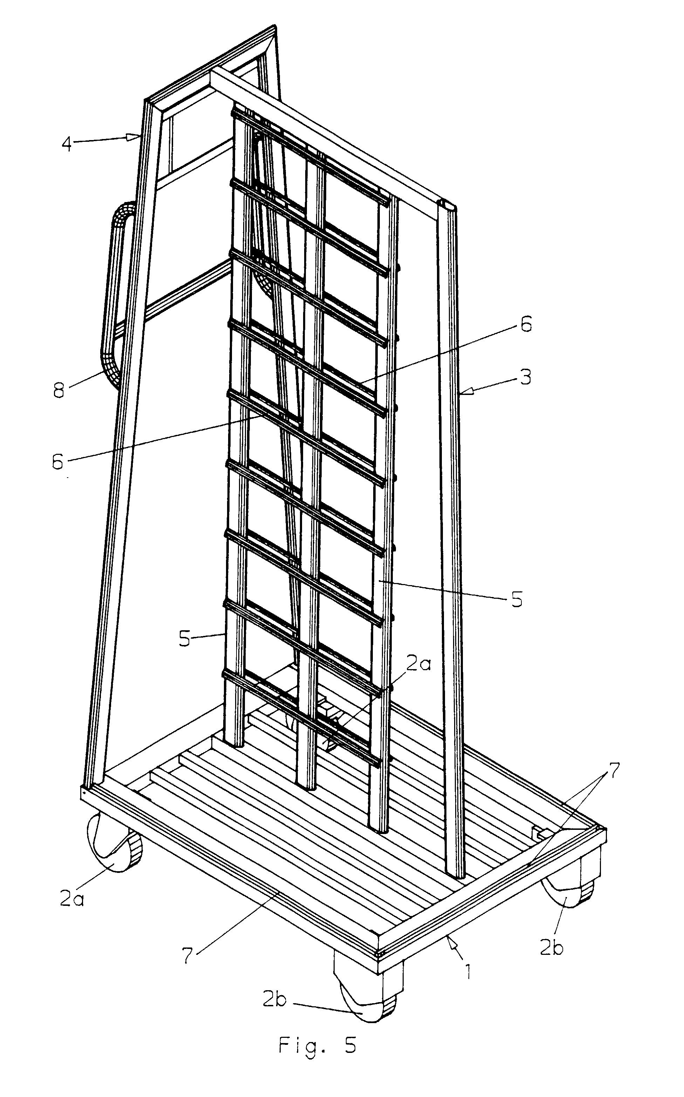

Fig. 5 shows an embodiment of the transportation trolley with hooking elements (6) in the shape of hooking edges instead of the short hooks as in Fig. 1, Fig. 2 and Fig. 3. This offers the advantage of better guidance when using a mechanical unloading device: the danger of jamming as a result of sagging over is reduced considerably.

Fig. 6 shows an embodiment without a back wall, with the handle for pushing/pulling (8) having been mounted on to the frame (3).

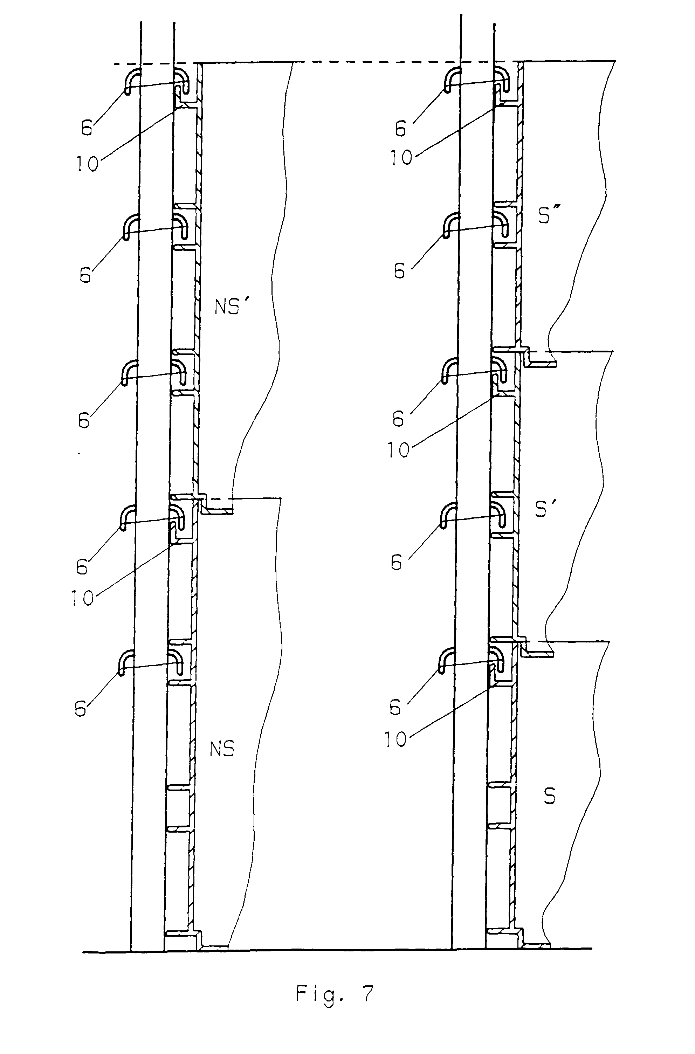

Fig. 7 is a diagrammatic illustration of two possible combinations of transportation trolleys with containers, the difference being the height of the containers. On the left side of Fig. 7 the containers (NS) have a height of approximately three times the distance between the hook-shaped elements (6), whereas on the right side of Fig. 7, the containers (S) have a height of approximately twice the distance between the hook-shaped elements (6). Both types of container can be transported with one and the same transportation trolley.

In the Figures, the containers (9) take the form of rectangular, open containers. Obviously, the containers may also have a different length-to-width ratio, provided that the transportation trolley has corresponding measurements. The containers may also be provided with a lid, provided that this does not preclude stable stacking. Collapsible containers may also be used, provided that they meet the other requirements for transportation with the transportation trolley.

## Claims

1. Transportation trolley for containers and containers to be transported on the transportation trolley, the transportation trolley comprising a substantially horizontally oriented first frame (1) on wheels (2a,2b) with a substantially vertically oriented second frame (3) on to that, said second frame serving as a support element for first coupling means (6) for detachably coupling on to second coupling means (10) present on the containers to be transported, the first frame (1) forming a support plane for at least one container, each container being supported by either the first frame or by a container standing beneath it, characterised by the first coupling means (6) consisting of hook-shaped elements with their opening downwards, into the direction of the plane of the first frame, and the second coupling means (10) comprising hook-shaped elements with their opening upwards, away from the bottom of a container.

2. Transportation trolley and containers in accordance with claim 1, characterised by the first frame (1) being provided with at least two substantially perpendicular quiding edges (7) protruding from the horizontal plane, whereas the bottoms of the containers to be transported are provided with corresponding upright edges for detachably coupling the containers to the first frame.

3. Transportation trolley and containers in accordance with claim 1 or 2, characterised by the first hook-shaped elements (6) being situated on the second frame (3) in as many vertical columns (5) as the number of stacks of containers to be transported, whereas the horizontal centre-to-centre distance between two vertical columns (5) equals the length of a transportable container.

4. Transportation trolley and containers in accordance with claim 1 or 2, characterised by the first hook-shaped elements (6) having the form of a profile rim, each for the purpose of detachably coupling to second coupling means (10) on at at least two containers.

## Patentansprüche

1. Transportwagen für Behälter und Behälter, die auf dem Transportwagen zu transportieren sind, wobei der Transportwagen einen im wesentlichen horizontal ausgerichteten ersten Rahmen (1) auf Rädern (2a, 2b) mit einem im wesentlichen vertikal ausgerichteten zweiten Rahmen (3) auf diesem umfasst, wobei der zweite Rahmen als Stützelement für erste Kopplungsmittel (6) dient, um diese in lösbarer Weise mit zweiten Kopplungsmittel (10) anzukoppeln, die auf den zu transportierenden Behältern vorgesehen sind, wobei der erste Rahmen (1) eine Stützebene für mindestens einen Behälter bildet und wobei jeder Behälter von mindestens dem ersten Rahmen oder durch einen unter ihm stehenden Behälter gestützt wird, **dadurch gekennzeichnet**, dass die ersten Kopplungsmittel (6) hakenförmige Elemente mit nach unten gerichteten Öffnungen in Richtung der Ebene des ersten Rahmens ausgerichtet umfassen und dass die zweiten Kopplungsmittel (10) hakenförmige Elemente mit nach oben gerichteten Öffnungen weg vom Boden eines Behälters ausgerichtet umfassen.

2. Transportwagen und Behälter nach Anspruch 1, dadurch gekennzeichnet, dass der erste Rahmen (1) mit mindestens zwei im wesentlichen senkrechten Führungskanten (7) versehen ist, die sich von der horizontalen Ebene weg erstrecken, wohingegen die Böden der zu transportierenden Behälter mit entsprechenden aufrechten Kanten zur entfernbaren Kopplung der Behälter auf dem ersten Rahmen versehen sind.

3. Transportwagen und Behälter nach Anspruch 1 oder Anspruch 2, dadurch gekennzeichnet, dass die ersten hakenförmigen Elemente (6) auf dem zweiten Rahmen (3) in so vielen vertikalen Spalten (5) angeordnet sind, wie es der Anzahl der Stapel an zu transportierenden Behältern entspricht, wohingegen die horizontalen Mitte zu Mitte Abstände zwischen zwei vertikalen Spalten (5) der Länge eines transportablen Behälters entspricht.

4. Transportwagen und Behälter nach Anspruch 1 oder Anspruch 2, dadurch gekennzeichnet, dass die ersten hakenförmigen Elemente (6) die Gestalt einer profilierten Kante aufweisen, die jeweils den Zweck der lösbaren Entkopplung mit den zweiten Kopplungsmittel (10) von zumindest zwei Behältern aufweisen.

## Revendications

1. Chariot de transport pour des bacs et bacs devant être transportés sur le chariot de transport, le chariot de transport comportant un premier bâti orienté sensiblement horizontalement (1) sur des roues (2a, 2b) avec un deuxième bâti orienté sensiblement verticalement (3) sur celui-ci, ledit deuxième bâti servant d'élément de support pour des premiers moyens d'accouplement (6) destinés à se raccorder de façon amovible à des deuxièmes moyens d'accouplement (10) présents sur les bacs devant être transportés, le premier bâti (1) formant un plan de support pour au moins un bac, chaque bac étant supporté par le premier bâti ou par un bac se trouvant dessous, caractérisés par les premiers moyens d'accouplement (6) qui se composent d'éléments en forme de crochet avec leur ouverture vers le bas, dans la direction du plan du premier bâti, et les deuxièmes moyens d'accouplement (10) qui se composent d'éléments en forme de crochet avec leurs ouvertures vers le haut, à l'écart du fond d'un bac.

2. Chariot de transport et bacs selon la revendication 1, caractérisés par le premier bâti (1) qui est pourvu d'au moins deux bords de guidage sensiblement perpendiculaires (7) qui dépassent du plan horizontal, alors que les fonds des bacs devant être transportés sont pourvus de bords verticaux correspondants pour le raccordement de manière amovible des bacs sur le premier bâti.

3. Chariot de transport et bacs selon la revendication 1 ou 2, caractérisés par les premiers éléments en forme de crochet (6) qui sont situés sur le deuxième bâti (3) en autant de colonnes verticales (5) que le nombre de piles de bacs devant être transportés, alors que la distance horizontale centre à centre entre deux colonnes verticales (5) est égale à la longueur d'un bac transportable.

4. Chariot de transport et bacs selon la revendication 1 ou 2, caractérisés par les premiers éléments en forme de crochet (6) qui ont la forme d'un rebord profilé, chacun dans le but de se raccorder de manière amovible à des seconds moyens d'accouplement (10) sur au moins deux bacs.
